# EUROPÄISCHE PATENTSCHRIFT

(11) **EP 0 336 277 B1**
(45) Veröffentlichungstag und Bekanntmachung des Hinweises auf die Patenterteilung: **04.08.1993**
(21) Anmeldenummer: 89105528.7
(22) Anmeldetag: 29.03.1989
(51) Int. Cl.: B64D 17/02

(54) **Gleitschirm**
Gliding parachute
Parachute planeur

(30) Priorität: 08.04.1988 CH 1293/88
(43) Veröffentlichungstag der Anmeldung: 11.10.1989
(73) Patentinhaber: Schafroth, Konrad, 3011 Bern (CH)
(72) Erfinder: Schafroth, Konrad, 3011 Bern (CH)
(74) Vertreter: Blum, Rudolf Emil Ernst

(56) Entgegenhaltungen:
- WO-A-88/05746
- GB-A- 2 170 156
- US-A- 3 972 495

## Beschreibung

Die Erfindung betrifft einen aus flexiblen Werkstoffen gebildeten, durch die anströmende Luft aufblasbaren, tragflächenartigen Gleitschirm mit einer oberen und einer unteren Schirmfläche, welche zusammen ein Tragflächen-Profil mit geschlosseuer Profilnase bilden, wobei an der Unterfläche hinter der Zone des grössten Standrucks mindestens eine als Rückschlagventil ausgebildete Füllöffnung angeordnet ist, welche beim Aufblasen des Schirms geöffnet und im Flug geschlossen ist.

Gleitschirme oder Gleit-Fallschirme dieser Art können in herkömmlicher Weise zum Absprung aus einem Luftfahrzeug verwendet werden, eignen sich aber insbesondere auch für den Fusstart im Gebirge oder für den Start mittels einer Winde. Beim Start werden die Gleitschirme, die aus flexiblen Werkstoffen, wie z.B. luftundurchlässigen Gewebebahnen aufgebaut sind, von der anströmenden Luft zu einem Tragkörper aufgebläht.

Um das erwähnte Aufblähen des Gleitschirms beim Start innert kurzer Zeit zu bewirken, besitzen bekannte Gleitschirme, wie z.B. in der DE-OS 37 07 463 beschrieben, eine offene Vorderkante, durch welche die Luft rasch ins Profilinnere einströmt. Solche Schirme haben bekannterweise einen relativ grossen Widerstand und einen relativ schlechten Gleitwinkel.

Es wurde deshalb dazu übergegangen, die Füllöffnungen von der Vorderkante weg zu verlegen, d.h. die Profilvorderseite zu schliessen. Im aufgeblähten Zustand wird dabei eine Art Tragflügel mit einer oberen und einer unteren Schirmfläche sowie einer vorne geschlossenen Flügelnase gebildet. Ein solcher Tragflügel erzeugt im aufgeblähten Zustand einen beachtlichen Auftrieb und hat einen erheblich flacheren Gleitwinkel.

Ein Problem beim Gebrauch eines Gleitschirms dieser Konstruktion besteht darin, dass sich der Schirm beim Start oft nicht schnell und sicher genug mit Luft füllt, wodurch der Startvorgang beeinträchtigt, wenn nicht verhindert wird.

Aus US-A-3 972 495 sind Gleitschirme bekannt, die an der Unterseite Füllöffnungen mit Rückschlagventilen besitzen. Diese bleiben nach dem Aufblasen des Gleitschirms geschlossen. Es ist damit möglich, dass der Staudruck bereichsweise den Innendruck übersteigt und eine Verformung der Tragflügelform bewirkt. Dies kann zu einem verschlechterten Tragflächenprofil mit reduziertem Gleitwinkel führen.

Aufgabe der Erfindung ist es daher, einen Gleitschirm der eingangs genannten Art so auszugestalten, dass er sich in kurzer Zeit sicher zu einem stabilen Profil aufbläht, welches zugleich einen optimalen Gleitwinkel besitzt.

Die Lösung dieser Aufgabe erfolgt mit den in Patentanspruch 1 genannten Merkmalen.

Durch die anspruchsgemässen Füllöffnungen strömt beim Startversuch sofort ein grosses Luftvolumen in den Schirm und bläht diesen unfehlbar mit grosser Sicherheit zur erforderlichen Tragflügelform auf. Durch die von vorn durch die Drucköffnungen einströmende Stauluft wird das Rückschlagventil an den Füllöffnungen sofort wieder geschlossen. Die Drucköffnungen dienen dann nur noch dazu, den Innendruck aufrechtzuerhalten. Deshalb werden sie hier "Drucköffnungen" genannt.

Nachfolgend werden anhand der Zeichnungen Ausführungsbeispiele der Erfindung näher erläutert. Es zeigen:
Figur 1 den erfindungsgemässen Gleitschirm in einer Schnittansicht senkrecht zur Flugrichtung,
Figur 2 ein entsprechendes Diagramm mit dem Verlauf der Druckkurve an der Schirmunterseite, und
Figur 3 verschiedene Anordnungen der Druck- und Füllöffnungen an der Schirmunterseite.

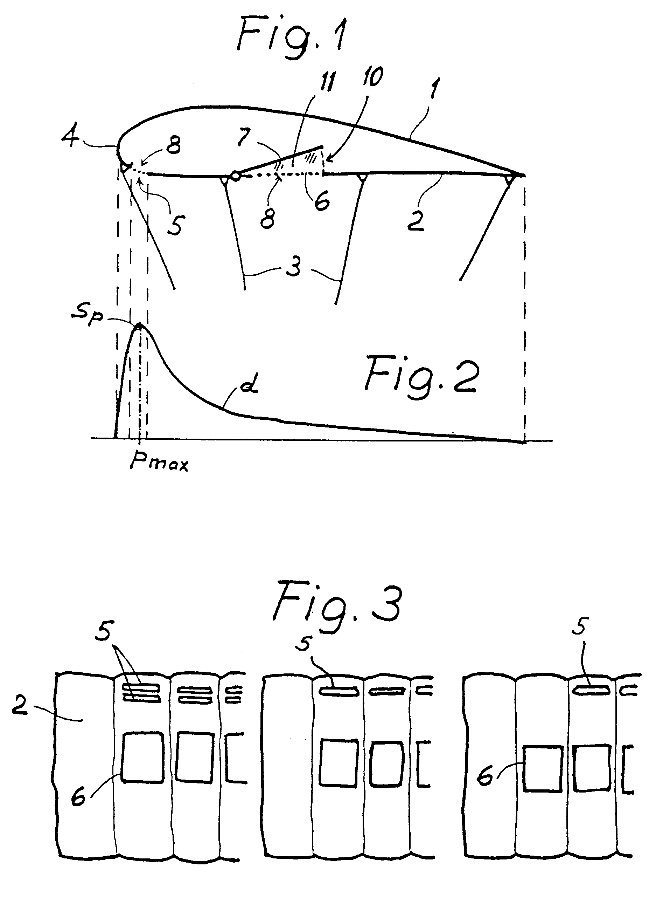

Das in Figur 1 in aufgeblähtem Zustand dargestellte Ausführungsbeispiel der Erfindung zeigt im Profil die Form eines Tragflügels mit einer oberen Schirmfläche 1 und einer unteren Schirmfläche 2 aus luftundurchlässigem Gewebe und Tragseilen 3. Der Gleitschirm 1 besitzt im Flugzustand ein Tragflügelprofil mit geschlossener Flügelnase 4.

Zum Füllen beim Start weist der Gleitschirm 1 an seiner Unterfläche 2 in der Zone des grössten Staudrucks eine oder mehrere über die Spannweite verteilte Drucköffnungen auf. Fig. 2 zeigt den Verlauf der Druckkurve d dieses Schirms im Gleitflug. Wie ersichtlich, herrscht in der Staudruckzone des Tragflügels der grösste Druck p max. Im Bereich dieser Stelle sind die Drucköffnungen 5 angebracht.

Die Drucköffnungen 5 können von rechteckiger oder ovaler Form sein. Sie sind vorzugsweise in Flugrichtung schmal, um die relativ schmale Druckspitze Sp maximal auszunützen und das Profil möglichst wenig zu stören.

Erfindungsgemäss sind nun hinter der Zone dieser Drucköffnungen wesentlich grössere Füllöffnungen 6 vorgesehen. Diese sind als Rückschlagventile ausgestaltet, indem am vorderen Rand derselben Klappen 7, ebenfalls aus luftundurchlässigem Gewebe, angelenkt sind. Diese Ventile schliessen sich automatisch, sobald der Schirm aufgebläht ist, und zwar durch den von vorn nach hinten wirkenden Staudruck. Das Flügelprofil ist dann mit Ausnahme der Drucköffnungen 5 geschlossen.

Die Klappen 7 aus luftundurchlässigem Gewebe sind an ihrer Hinterseite mit Vorteil über Schnüre 10 mit der unteren Schirmfläche 2 verbunden und sind über Seitenteile 11 mit der unteren Schirmfläche verbunden, um in ihrer offenen Lage über der jeweiligen Füllöffnung 6 zu positionieren.

Da die Ränder der Drucköffnungen 5, insbesondere der hintere Rand, während des Startvorganges infolge der unter Umständen rasch wechselnden Anströmrichtung sich nach aussen oder innen verbiegen können, was eine einwandfreie Funktion derselben zusätzlich beeinträchtigen kann, ist es vorteilhaft, wenn die Drucköffnungen mit einem Gitternetz 8 überdeckt sind, das mindestens in Flugrichtung Zugkräfte übertragen kann. Wie aus Fig. 1 ersichtlich ist, wird mit Vorteil auch bei den Füllöffnungen 6 ein entsprechendes Gitternetz 8 aus flexiblem Material vorgesehen, das mindestens in Flugrichtung Zugkräfte übertragen kann, so dass besonders die Füllöffnungen entsprechend grösser dimensioniert werden können und ein Aus- oder Einbiegen der Ränder verhindert wird. Dadurch kann das Aufblähen des Schirms weiter beschleunigt werden. Besonders wichtig ist ein solches Netz jedoch bei den Drucköffnungen, da durch Ausbiegen der Ränder beim Start das Profil verändert werden und dadurch der Staupunkt wandern könnte.

Fig. 3 zeigt verschiedene mögliche Anordnungen der Druck- und Füllöffnungen an der unteren Schirmfläche. Diese können beliebig über die Spannweite des Schirms verteilt sein, mit Vorteil befinden sich jedoch die Füllöffnungen hinter den Drucköffnungen. Letztere können auch in mehr als einer Reihe vorhanden sein.

Der beschriebene Gleitschirm besitzt mit seiner im wesentlichen geschlossenen Profilform ausgezeichnete Flugeigenschaften und stellt zugleich dank den als Rückschlagventile ausgebildeten Füllöffnungen einen problemlosen Start sicher. Insgesamt erhöht sich damit die Flugsicherheit wesentlich.

## Patentansprüche

1. Aus flexiblen Werkstoffen gebildeter, durch die anströmende Luft aufblasbarer, tragflächenartiger Gleitschirm mit einer oberen und einer unteren Schirmfläche (1,2), welche zusammen ein Tragflächen-Profil mit geschlossener Profilnase bilden, wobei an der Unterfläche (2) hinter der Zone des grössten Standrucks mindestens eine als Rückschlagventil ausgebildete Füllöffnung (6,7) angeordnet ist, welche beim Aufblasen des Schirms geöffnet und im Flug geschlossen ist, dadurch gekennzeichnet, dass im üßergang zwischen der Profilnase und der Unterfläche (2) im wesentlichen in der Zone des grössten Staudruckes eine oder mehrere über die Spannweite verteilte Drucköffnungen (5) oder mehrere Reihen solcher Drucköffnungen (5) vorgesehen sind, die im Flugzustand geöffnet bleiben, um einen Druckausgleich zwischen aussen und innen zu gewährleisten.

2. Gleitschirm nach Anspruch 1, dadurch gekennzeichnet, dass mindestens die Drucköffnungen (5) mit einem Gitternetz (8) überdeckt sind, das mindestens in Flugrichtung Zugkräfte überträgt.

3. Gleitschirm nach einem der vorangehenden Ansprüche, dadurch gekennzeichnet, dass die Füllöffnungen (6,7) mit einem Gitternetz (8) überdeckt sind, das mindestens in Flugrichtung Zugkräfte überträgt.

4. Gleitschirm nach einem der vorangehenden Patentansprüche, dadurch gekennzeichnet, dass die Drucköffnungen (5) in Flugrichtung schmal ausgebildet und im wesentlichen auf die Zone der Druckspitze des Staudrucks beschränkt sind.

5. Gleitschirm nach einem der vorangehenden Ansprüche, dadurch gekennzeichnet, dass die Füllöffnungen (6) wesentlich grössere Oeffnungen an der Schirmunterseite (2) bilden, als die Drucköffnungen (5).

6. Gleitschirm nach einem der vorangehenden Ansprüche, dadurch gekennzeichnet, dass die Füllöffnungen (6) in einer Zone wesentlich kleineren Drucks an der Schirmunterseite (2) angeordnet sind, als die Drucköffnungen (5).

7. Gleitschirm nach einem der vorangehenden Ansprüche, dadurch gekennzeichnet, dass das Rückschlagventil (6,7) durch eine am vorderen Rand der Füllöffnung (6) angelenkte, nach dem Schirminneren sich öffnende Klappe (7) aus luftundurchlässigem Gewebe gebildet ist.

8. Gleitschirm nach einem der vorangehenden Ansprüche, dadurch gekennzeichnet, dass über die Spannweite des Schirms verteilt mehrere Drucköffnungen (5) und mehrere Füllöffnungen (6) vorgesehen sind.

9. Gleitschirm nach Anspruch 8, dadurch gekennzeichnet, dass sich hinter jeder Drucköffnung (5) eine Füllöffnung (6) befindet.

## Claims

1. Wing shaped gliding parachute structured of flexible materials and adapted to be inflated by the air flowing thereagainst, having an upper and a lower parachute surface (1,2), which form together an airfoil with a closed profile leading edge, whereby at least one filling opening (6,7) designed as check valve is located at the lower surface (2) behind the zone of the highest dynamic pressure and which is opened during inflation of the parachute and is shut during flight, characterized in that one or a plurality of pressure openings (5) distributed across the span or several rows of such pressure openings (5) are located at the transition between the leading edge of the profile and the lower surface (2) substantially at the zone of the highest dynamic pressure in order to ensure a pressure equalization between the outside and the inside.

2. Gliding parachute according to claim 1, characterized in that at least the pressure openings (5) are covered by a net mesh (8) which transmits forces at least in the direction of flight.

3. Gliding parachute according to one of the preceding claims, characterized in that the filling openings (6,7) are covered by a net mesh (8) which transmits forces at least in the direction of flight.

4. Gliding parachute according to one of the preceding claims, characterized in that the pressure openings (5) are formed narrow in the direction of flight and are restricted substantially to the zone of the pressure peak of the dynamic pressure.

5. Gliding parachute according to one of the preceding claims, characterized in that the filling openings (6) form considerably larger openings at the lower parachute surface (2) than the pressure openings (5).

6. Gliding parachute according to one of the preceding claims, characterized in that the filling openings (6) are located in a zone of considerably lower pressure at the lower parachute surface (2) than the pressure openings (5).

7. Gliding parachute according to one of the preceding claims, characterized in that the check valve (6,7) is formed by a flap (7) of an airtight weaving hinged at the forward edge of the filling opening (6) and opening towards the inside of the parachute.

8. Gliding parachute according to one of the preceding claims, characterized in that a plurality of pressure openings (5) distributed over the span of the parachute and a plurality of filling openings (6) are foreseen.

9. Gliding parachute according to claim 8, characterized in that a filling opening (8) is located behind every pressure opening (5).

## Revendications

1. Aéroglisseur fait de matériaux flexibles, et gonflable par le courant d'air dû à sa course pour prendre la forme d'un profil d'aile, avec une surface de profil supérieure et une surface de profil inférieure (1, 2), formant ensemble un profil avec un bord d'attaque fermé, au moins une ouverture de remplissage (6, 7) formant une valve contre-coup étant aménagée en arrière de la région de plus grande pression, cette ouverture étant ouverte lors du gonflage de l'aéroglisseur et fermée lorsque celui-ci est en vol, caractérisé en ce que dans la zone de transition entre le bord d'attaque et la surface inférieure (2) une ou plusieurs ouvertures de compensation de pression (5), ou plusieurs rangées de telles ouvertures (5) sont prévues et restent ouvertes en vol pour réaliser un équilibrage des pressions intérieure et extérieure.

2. Aéroglisseur selon la revendication 1, caractérisé en ce qu'au moins les ouvertures de compensation (5) sont recouvertes d'un treillis (8) transmettant des forces de traction au moins parallèlement à la direction du vol.

3. Aéroglisseur selon une des revendications précédentes, caractérisé en ce que les ouvertures de remplissage (6, 7) sont recouvertes d'un treillis (8) transmettant des forces de traction au moins parallèlement à la direction du vol.

4. Aéroglisseur selon une des revendications précédentes, caractérisé en ce que les ouvertures de compensation (5) sont étroites dans la direction du vol et essentiellement limitées à la zone de plus grande pression.

5. Aéroglisseur selon une des revendications précédentes, caractérisé en ce que les ouvertures de remplissage (6) formant sur la face inférieure (2) de l'aéroglisseur des ouvertures sensiblement plus grandes que les ouvertures de compensation (5).

6. Aéroglisseur selon une des revendications précédentes, caractérisé en ce que les ouvertures de remplissage (6) sont agencées dans une zone de la face inférieure (2) de l'aéroglisseur où la pression est nettement plus basse qu'à l'emplacement des ouvertures de compensation (5).

7. Aéroglisseur selon une des revendications précédentes, caractérisé en ce que la valve contre-coup (6, 7) est formée par un volet (7) en tissu imperméable à l'air articulé sur le bord antérieur de l'ouverture de remplissage (6) et s'ouvrant vers l'intérieur.

8. Aéroglisseur selon une des revendications précédentes, caractérisé en ce que plusieurs ouvertures de compensation (5) et plusieurs ouvertures de remplissage (6) sont réparties le long de l'envergure de l'aéroglisseur.

9. Aéroglisseur selon la revendication 8, caractérisé en ce qu'une ouverture de remplissage (6) se trouve derrière chaque ouverture de compensation (5).
